(19) Europäisches Patentamt
European Patent Office
Office européen des brevets

(11) EP 3 775 302 B1

(12) **EUROPÄISCHE PATENTSCHRIFT**

(45) Veröffentlichungstag und Bekanntmachung des Hinweises auf die Patenterteilung:
**30.08.2023 Patentblatt 2023/35**

(21) Anmeldenummer: **19715905.6**

(22) Anmeldetag: **03.04.2019**

(51) Internationale Patentklassifikation (IPC):
***C22B 3/24*** $^{(2006.01)}$ ***C02F 1/00*** $^{(2023.01)}$
***C22B 7/00*** $^{(2006.01)}$ ***C12R 1/00*** $^{(2006.01)}$

(52) Gemeinsame Patentklassifikation (CPC):
**C22B 7/006; C02F 1/26; C02F 1/683; C22B 3/42;**
C02F 1/36; C02F 1/442; C02F 2101/20;
C02F 2303/18; Y02P 10/20

(86) Internationale Anmeldenummer:
**PCT/EP2019/058383**

(87) Internationale Veröffentlichungsnummer:
**WO 2019/193042 (10.10.2019 Gazette 2019/41)**

(54) **RÜCKGEWINNUNG VON METALLEN AUS INDUSTRIEABWÄSSERN GERINGER METALL-KONZENTRATION**

RECOVERY OF METALS FROM INDUSTRIAL WASTEWATER OF LOW METAL CONCENTRATION

RÉCUPÉRATION DE MÉTAUX À PARTIR D'EFFLUENTS INDUSTRIELS À FAIBLE CONCENTRATION EN MÉTAUX

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **04.04.2018 DE 102018107923**

(43) Veröffentlichungstag der Anmeldung:
**17.02.2021 Patentblatt 2021/07**

(73) Patentinhaber: **Helmholtz-Zentrum Dresden - Rossendorf e.V.**
**01328 Dresden (DE)**

(72) Erfinder:
- **JAIN, Rohan**
  **01328 Dresden (DE)**
- **POLLMANN, Katrin**
  **01324 Dresden (DE)**
- **LEHMANN, Falk**
  **01139 Dresden (DE)**

(74) Vertreter: **Kailuweit & Uhlemann Patentanwälte Partnerschaft mbB**
**Bamberger Straße 49**
**01187 Dresden (DE)**

(56) Entgegenhaltungen:
**CN-A- 106 854 030 DE-A1- 10 045 830**

- **ANUPA NAIR ET AL: "Production and Characterization of Siderophores and its Application in Arsenic Removal from Contaminated Soil", WATER, AIR, AND SOIL POLLUTION, KLUWER ACADEMIC PUBLISHERS, DO, Bd. 180, Nr. 1-4, 10. November 2006 (2006-11-10), Seiten 199-212, XP019485191, ISSN: 1573-2932**
- **RENARD, G.; MURESEANU, M.; GALARNEAU. A.; LERNER. D.A.; BRUNEL, D.: "Immobilisation of a biological chelate in porous mesostructured silica for selective metal removal from wastewater and its recovery", NEW J. CHEM., Bd. 29, 2005, Seite 912, XP002791219, in der Anmeldung erwähnt**
- **NAIR A ET AL: "Study of speciation of metals in an industrial sludge and evaluation of metal chelators for their removal", JOURNAL OF HAZARDOUS MATERIALS, ELSEVIER, AMSTERDAM, NL, Bd. 152, Nr. 2, 1. April 2008 (2008-04-01) , Seiten 545-553, XP026052125, ISSN: 0304-3894, DOI: 10.1016/J.JHAZMAT.2007.07.054 [gefunden am 2008-04-01]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **GADD G M: "BIOSORPTION", CHEMISTRY & INDUSTRY, SOCIETY OF CHEMICAL INDUSTRY. LONDON, GB, Nr. 13, 2. Juli 1990 (1990-07-02), Seiten 421-426, XP000218405, ISSN: 0009-3068**
- **JAIN, R.; CIRINA, F.; KADEN, P.; POLLMANN, K.: "Investigation of the Ga Complexation Behaviour of the Siderophore Desferrioxamine B", SOLID STATE PHENOM., Bd. 262, 2017, Seiten 643-646, XP002791220, in der Anmeldung erwähnt**


Bemerkungen:

Die Akte enthält technische Angaben, die nach dem Eingang der Anmeldung eingereicht wurden und die nicht in dieser Patentschrift enthalten sind.

## Beschreibung

Die vorliegende Erfindung betrifft ein Verfahren zur Rückgewinnung von Metallen aus Industrieabwässern.

Während der letzten Jahre wurden zahlreiche Untersuchungen zur Entwicklung günstigerer und effektiverer Methoden zur Rückgewinnung von Metallen aus Industrieabwässern unternommen. Eine interessante Variante ist die der selektiven Sorption.

Sorption ist eine kosteneffektive Technologie zur Rückgewinnung von Metallen aus Industrieabwässern, die jedoch häufig mit einer geringen Selektivität des Sorbers gegenüber dem zurückzugewinnenden Metall einhergeht. Zur Erhörung der Selektivität empfiehlt sich die Funktionalisierung mit Komplexbildnern, die selektiv für das zurückzugewinnende Metall sind. Renard et al. (2005) befassen sich mit der Aufnahme und Wiederfreigabe von Fe(III) aus multimetallischen Modell-Abwasserlösungen mithilfe von Siderophoren des Typs Pyoverdin, einem durch Bakterien sekretierten Komplexbildner, der auf MTS (micelle-templeated silicas) immobilisiert wurden. Es wurde sich ausschließlich mit der Chelatierung von Fe(III) befasst. Es werden lediglich hohe Metallkonzentrationen (40mg/mL) getestet. Die Freisetzung des Fe(III) aus dem Komplex erfolgte mittels Reduktion zu Fe(II) mit $NaHSO_3$. Entwicklungen zur Regenerierung der Siderophoren des Typs Pyoverdin wurden nicht unternommen.

Bei dieser Immobilisierung der Pyoverdine auf MTS konnte nur eine sehr geringe Beladung erreicht werden. Unter Annahme, dass ein Pyoverdin ein $Fe^{3+}$-Ion komplexiert (1:1), kann damit nur eine sehr geringe Komplexierungskapazität von 2.5mg Eisen pro g Trägermaterial erreicht werden. Für eine Anwendung im großen Maßstab würden damit viel zu große Mengen an Trägermaterial benötigt werden.

Die Immobilisierung von Siderophoren ist somit aus dem Stand der Technik bekannt.

Roosen et al. (2017) beschreiben die Immobilisierung der beiden niedermolekularen Komplexbildner 8-Hydroxyquinoline und 8-Hydroxyquinaldin an Chitosan-Silica-Resins zur Rückgewinnung von Ga(III) bzw. Al(III) aus stark alkalischen Modell-Abwasserlösungen (synthetische Bayer-Lösungen). Es bilden sich vorrangig Komplexe mit Al(III) und die Methode ist nicht geeignet, um selektiv Gallium abzutrennen. Nachteilig ist auch, dass die Komplexbildner nur durch organisch-chemische Synthesemethoden und nicht mit Hilfe von Mikroorganismen hergestellt werden können und damit aus ökologischen Gründen nicht vorteilhaft sind Es wurden lediglich hohe Metallkonzentrationen getestet (140mg/L Ga).

Generell sind alle vorhandenen Methoden nur für hohe Konzentration von Metallen (>40mg/L) anwendbar. Keine der vorhandenen Methoden eignet sich für stark verdünnte Industrieabwässer, d.h. bei denen der Gehalt des zurückzugewinnenden Metalls bei <40mg/L liegt.

Bei all diesen Methoden ist die Effizienz der Metallrückgewinnung im Allgemeinen gering.

Martinez et al. (2000) beschreiben die Komplexierung von Fe(III) durch marine Siderophore, wie Aquachelinen und Marinobactinen.

Analytisch wurden marine Siderophore und deren Komplexierung mit Fe(III) und Ga(III) mittels $^{13}C$ NMR und IR-Spektroskopie durch Zhang et al. (2009) untersucht.

Takagai et al. (2007) immobilisierten das Siderophor Desferrioxamin B (DFO-B) auf Nylon 6,6 und untersuchten die Komplexierung verschiedener Metalle mittels anschließender Lösungsmittelextraktion.

All diese auf Komplexierung basierenden Methoden gehen im Allgemeinen mit Schwierigkeiten bei u.a. den Aufreinigungsschritten einher, z.B. bei: Abtrennung von Metallen aus Lösungen z.B. in Form von Komplexen oder Abtrennung des Metalls nach Freisetzung aus solch einem Komplex.

Für den Fall, dass zur Metallrückgewinnung Komplexbildner eingesetzt werden, stellt sich auch das Problem einer effektiven Rückgewinnung des Komplexbildners zur Wiederverwendung. In solch einem Prozess zur Metallrückgewinnung unter Einsatz von Komplexbildnern stellt der letztgenannte Aspekt der Rückgewinnung des Komplexbildners eine notwendige Bedingung dar, damit der Prozess ökonomisch ist.

Borgias et al. (1989) beschreiben die Komplexierung der gleichen Metalle ($Ga^{3+}$ und $Al^{3+}$) mithilfe des Siderophors Desferrioxamin B (DFO-B) sowie die Aufreinigung der Komplexe mittels Kationenaustausch-HPLC. Die Kinetik der Komplexbildung wurde intensiv untersucht.

Jain et al. (2017) beschreiben bei der selektiven Sorption von Ga(III) mit DFO-B die säulenchromatographische Abtrennung mittels einer Reverse-Phasen C18-Chromatographiesäule.

US20120325740A1 beschreibt ebenfalls die Komplexierung mittels Siderophoren, wobei Siderophor-produzierende Bakterien immobilisiert werden, an einem Säulenmaterial, einem Filter oder einer porösen Oberfläche. Die verwendeten Bakterien sind halophile (eine salzreiche Umgebung bevorzugende) Bakterien. Nachteilig ist diese Methode aufwendig und vor allem anfällig für Störungen, da die Bakterien sehr definierte Lebensbedingungen benötigen. Ein weiterer Nachteil ist, dass die Durchsatzmenge eines solchen Prozesses relativ gering ist, da die Menge des bereitgestellten Siderophors pro Fläche bzw. pro Raumeinheit begrenzt ist, nicht zuletzt ebenfalls durch die Lebensanforderungen der Bakterien, die nur eine gewisse Bakteriendichte erlauben. Im Übrigen werden die Bakterien genetisch modifiziert, damit die Siderophor-Produktion nicht unrentabel niedrig ist.

Hernlem et al. (1999) untersuchen Komplexbildungskonstanten für das Siderophor Desferrioxamin B (FDO-B)

mit von Eisen verschiedenen Metallen.

Gladyshev et al. (2015), Liu et al. (2017), Nusen et al. (2016) und Roosen et al. (2017) beschreiben die Rückgewinnung von verschiedenen Metallen aus Industrieabwässern mittels alternativer chemischer Prozesse wie Lösungsmittelextraktion, Ionenaustausch oder Ausfällung.

Aus dem Stand der Technik bekannte Prozesse, wie Lösungsmittelextraktion, Ionenaustausch, fraktionierte Präzipitierung oder elektrochemische Abscheidung, sind ökologisch unvorteilhaft, da sie auf chemisch hergestellten Reagenzien basieren.

Des Weiteren erfordert die Verwendung von organischen Lösungsmitteln zusätzliche Verfahrensschritte zu deren Entfernung und erhöht damit die Prozesskosten.

Umweltfreundliche Varianten einer Metallrückgewinnung aus Industrieabwässern stehen bisher nicht zur Verfügung. Umweltfreundlicher wäre es u.a., giftige Chemikalien und organische Lösungsmittel (z.B. bei der Lösungsmittelextraktion) zu vermeiden, biologisch abbaubare Substanzen (z.B. die Komplexbildner) zu verwenden oder einen Prozess mit geringerem Energiebedarf (im Vergleich zu elektrochemischen Prozessen) zu entwickeln.

Ein Ansatz ist die von Kinoshita et al. (2011) beschriebene Anreicherung von Gallium aus multimetallischen Lösungen mittels selektiver Bindung an Schäumen in einem kontinuierlichen, Lösungsmittel-freien Gegenstromverfahren. Nachteil ist, dass das Verfahren noch nicht die Industriereife erlangt hat. Vor allem aber ist es lediglich ein Verfahren zur Anreicherung von Ga aus einer multimetallischen Lösung, nicht aber zur sauberen Abtrennung. Die Verunreinigung mit anderen Metallen erlaubt nur eine sehr eingeschränkte Weiterverwendung des angereicherten Galliums. Des Weiteren ist nachteilig, dass die zur Schaumbildung nötigen Tenside auf chemischem Wege hergestellt werden müssen und der Prozess damit wenig umweltfreundlich ist.

Die Entwicklung eines generellen Verfahrens zur Abtrennung von Metallen aus Industrieabwässern ist nicht trivial, da die tatsächliche Zusammensetzung solcher Industrieabwässer weder komplett bekannt ist noch konstant gleich ist. Je nach Industriebranche und Unternehmen variiert die Zusammensetzung des Industrieabwassers gewöhnlich sehr stark. Somit ist es schwer, ein generell, für alle Arten von Industrieabwasser anwendbares Verfahren zu entwickeln.

Die technische Aufgabe, die dieser Erfindung zugrunde liegt, ist die Bereitstellung eines Verfahrens zur Rückgewinnung von Metallen aus Industrieabwässern. Dieses Verfahren soll anwendbar sein für Industrieabwässer verschiedener Industriezweige; es soll also ein generelles Verfahren sein. Dieses Verfahren soll umweltfreundlich sowie ökonomisch vorteilhaft sein und soll bei geringen Temperaturen (max. 50°C) durchführbar sein. Er muss ebenfalls eine effiziente Rückgewinnung der verwendeten Komplexbildner beinhalten, um ökonomisch praktikabel zu sein. Die Effizienz der Metallrückgewinnung sollte möglichst hoch sein.

Des Weiteren soll der Prozess auch bei möglichst geringen Metall-Konzentrationen, d.h. bei verdünnten Industrieabwässern anwendbar sein.

Die Erfindung stellt ein mehrstufiges Verfahren bereit, zur selektiven, umweltfreundlichen und kostengünstigen Rückgewinnung von Nichteisenmetallen aus Industrieabwässern.

Gegenstand der Erfindung ist daher ein Verfahren zur Rückgewinnung von Nichteisenmetallen aus Industrieabwässern, umfassend:

A: Komplexierung der Metallionen des zurückzugewinnenden Metalls durch Addition von Siderophoren zum Industrieabwasser,
wobei die Siderophoren ausgewählt sind aus Desferrioxamin B (DFO-B), Desferrioxamin E (DFO-E), Marinobactinen, Aquachelinen, Amphibactinen, Ochrobactinen und Synechobactinen und deren Salzen,
B: Abtrennung des Metall-Siderophor-Komplexes,
C: Freisetzung des Metalls aus dem Metall-Siderophor-Komplex,
D: Abtrennung des Metalls,
E: Rückgewinnung des Siderophors, und
F: Abtrennung des Siderophors,

wobei in Schritt

C: die Freisetzung des Metalls aus dem Metall-Siderophor-Komplex durch Zugabe von Fe(III)-Ionen und Bildung eines Fe(III)-Siderophor-Komplexes erfolgt, und
E: die Rückgewinnung des Siderophors durch Zugabe eines Reduktionsmittels und/oder eines Chelators erfolgt,

oder in Schritt

C: die Freisetzung des Metalls aus dem Metall-Siderophor-Komplex durch Zugabe eines Chelators erfolgt, wodurch sich ein Metall-Chelator-Komplex bildet, und
D: das Metall als Metall-Chelator-Komplex abgetrennt wird.

Erfindungsgemäß wird bei Zugabe der Siderophoren zur Metall-enthaltenden Lösung ein Siderophor-Metall-Komplex gebildet (A). In B erfolgt eine Abtrennung des Metall-Siderophor-Komplexes wobei im darauffolgenden Schritt C das komplexierte Metall freigesetzt wird.

In D wird das Metall abgetrennt.

In E wird erfindungsgemäß das Siderophor zurückgewonnen, abgetrennt (F) und geht somit vorwiegend unverbraucht wieder aus dem Prozess hervor.

Der Prozess ist damit ökonomisch und kostengünstig sowie umweltfreundlich.

Der Prozess der vorliegenden Erfindung ist auch bei verdünnten Industrieabwässern, d.h. bei niedrigen Konzentrationen des zurückzugewinnenden Metalls (<40mg/L, insbesondere 1 bis 30 mg/L, bevorzugt auch unter 20 mg/L), durchführbar.

Vorteilhaft ist das erfindungsgemäße Verfahren selektiv gegenüber gängigen Verunreinigungen wie Zn, Cu, Cd, Pb, Ni, Alkali- und Erdalkalimetallen.

Die zurückzugewinnenden Metalle in Industrieabwässern liegen in der Regel als Metallionen vor.

Bei der Formulierung "zurückzugewinnenden Metalle" oder "Metalle" sind erfindungsgemäß immer die korrespondierenden Metallionen zu verstehen, und zwar nicht auf eine einzelne Wertigkeit beschränkt.

Siderophore sind eine Gruppe der Komplexbildner. Als Siderophore (gr. sideros = Eisen, gr. phorein = tragen) bezeichnet man von Mikroorganismen und Pflanzen synthetisierte, wasserlösliche, niedermolekulare, organische Substanzen, die biologisch abbaubar sind. Sie binden Fe(III)-Ionen mit hoher Spezifität und Affinität unter Bildung stabiler Chelatkomplexe und sind für den Eisen-Transport in die Zelle verantwortlich. Nach der Komplexierung der Eisen-Ionen werden die beladenen Siderophore von den Zellen der Produzenten über spezifische Transportsysteme wieder aufgenommen. Da die Komplexbildungskonstante der Siderophore für Fe(II)-Ionen sehr viel geringer ist als für dreiwertiges Eisen, wird das Metallion nach Reduktion zu Eisen(II) aus dem Komplex gelöst. Zu der Gruppe der Siderophore gehören verschiedene Substanzen: Desferrioxamine wie beispielsweise Desferrioxamin B (DFO-B) und Desferrioxamin E (DFO-E), marine Siderophore mit Fettsäuregruppen (hier fettsäurehaltige Siderophore genannt) wie beispielsweise Marinobactine, Aquacheline, Amphibactine, Ochrobactine und Synechobactine, aber auch marine Siderophore ohne Fettsäuregruppe wie beispielsweise Petrobactin. Die folgenden Strukturen zeigen einige dieser und noch weitere Vertreter der Siderophore.

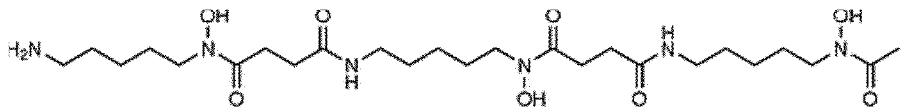

Desferrioxamin B

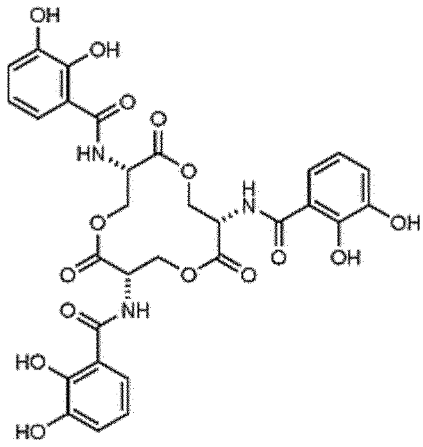

Enterobactin

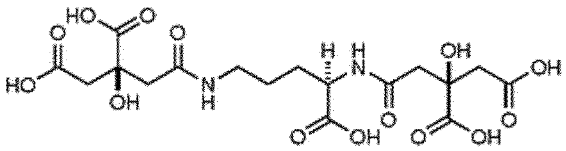

Staphyloferrin A

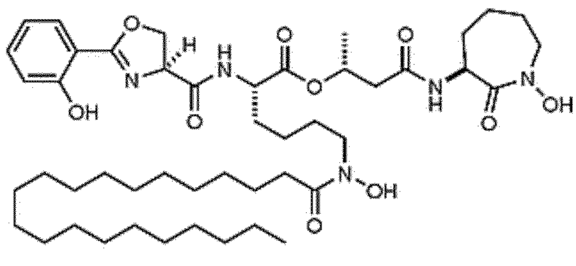

Mycobactin T

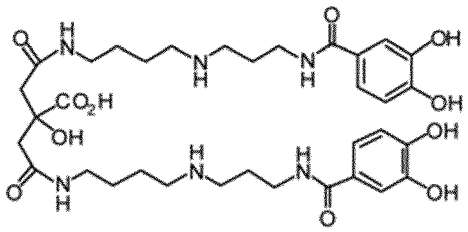

Petrobactin

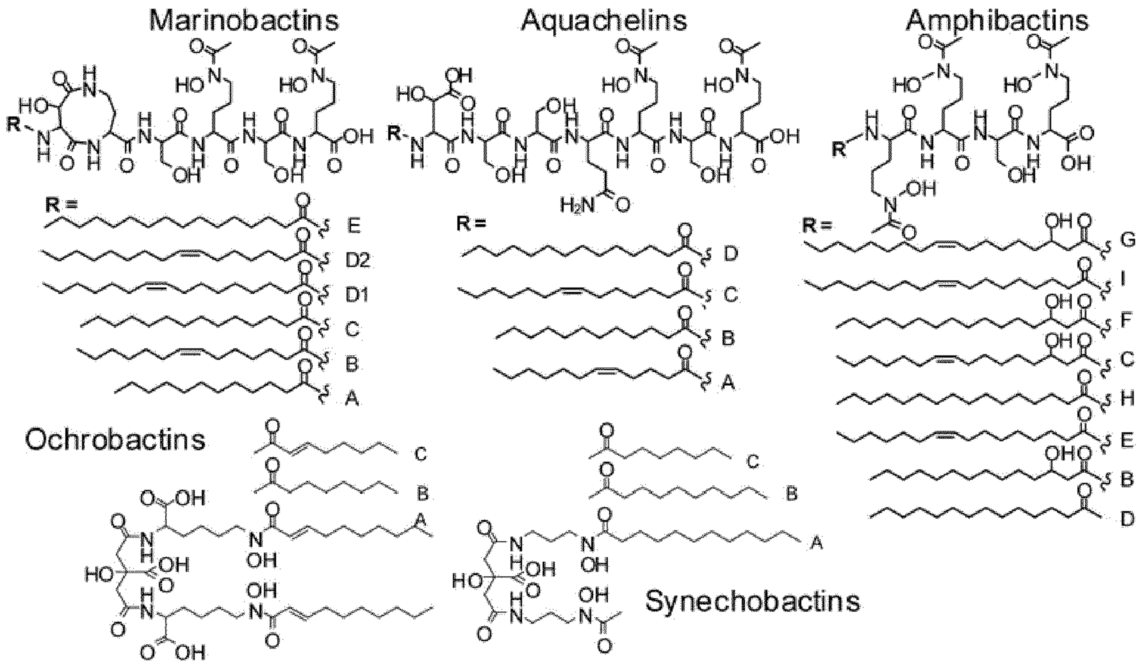

Marinobactins Aquachelins Amphibactins Ochrobactins Synechobactins

Wie aus den Strukturformeln der Siderophore hervorgeht, enthalten Siderophore mehrere polare Gruppen, insbesondere Carbonyl, Hydroxyl, Amino, Amid oder Hydroxam, die zur Komplexierung von Metallen geeignet sind.

Siderophore selbst sind inhärent selektiv gegenüber Metallen wie Ga, In, Ge(IV), Fe(III) oder V im Vergleich zu beispielsweise anderen divalenten Kationen wie Erdalkalimetallen (Mg, Ca), Cu, Zn, Ni oder monovalenten Alkalimetallen (Na, K). Diese hohe Selektivität gegenüber Ga, In, Ge(IV), Fe(III) und V besitzen Siderophore auch im Vergleich zu anionischen Metallformen wie beispielsweise Arsenit ($AsO_2^-$), Arsenat ($AsO_4^{3-}$), Chromat ($CrO_4^{2-}$), Selenat ($S2O_4^{2-}$), Selenit ($SeO_3^{2-}$). Bei einer Abwasserlösung, die beispielsweise Fe, Ga und In beinhaltet, verhält sich die Selektivität der Siderophore in der Reihenfolge $Fe^{3+} > Ga^{3+} > In^{3+}$.

Erfindungsgemäß kommen als Komplexbildner Siderophore, ausgewählt aus Desferrioxamin B (DFO-B), Desferrioxamin E (DFO-E), Marinobactinen, Aquachelinen, Amphibactinen, Ochrobactinen und Synechobactinen und deren Salzen zur Anwendung.

Sie sind Vertreter der Desferrioxamine und fettsäurehaltigen Siderophore und deren Salze.

Erfindungsgemäß sind die Desferrioxamine ausgewählt aus Desferrioxamin B (DFO-B) und Desferrioxamin E (DFO-E) und deren Salze, sowie die fettsäurehaltigen Siderophore ausgewählt aus Marinobactinen, Aquachelinen, Amphibactinen, Ochrobactinen und Synechobactinen und deren Salze.

Damit der Prozess im größeren Maßstab anwendbar ist, darf die Menge an Komplexbildner nicht unpraktikabel hoch sein, d.h. die Menge des Siderophors, das zum Industrieabwasser gegeben werden muss, damit das komplexierte Metall zurückgewonnen wird, muss möglichst klein sein. Um das zu erreichen muss die Komplexierungskapazitätdes Siderophors, abhängig vom Metall, entsprechend hoch sein. Bei verdünnten Industrieabwässern ist das umso wichtiger, da sonst übermäßig viel Siderophor zu dem Industrieabwasser gegeben werden muss. Vorteilhaft ist bei der Erfindung, dass diese Komplexierungskapazität, abhängig vom Metall und dessen Molmasse, für Eisen und Gallium am Beispiel der Desferrioxamine sehr hoch ist (100-130 mg Metall pro g Siderophor).

Erfindungsgemäß werden die Siderophore im Prozess zurückgewonnen, so dass der Prozess kostengünstiger als andere Prozesse ist. Zusätzlich ist der Prozess umweltfreundlich, weil die Siderophore durch Mikroorganismen oder Pflanzen hergestellt werden und schließlich auch wieder biologisch abbaubar sind. Dagegen sind andere sonst eingesetzte, syntheisch hergestellte Chemikalien schwer abbaubar und z.T. giftig.

Vorteilhaft ist die Effizienz der Metallrückgewinnung über den ganzen Prozess mit >90% hoch.

Vorteilhaft ist für die Durchführung des erfindungsgemäßen Verfahrens keine Wärmezufuhr notwendig. Es ist möglich, das Verfahren bei Umgebungstemperatur durchzuführen. Die Temperatur übersteigt damit in keinem der Prozessschritte 50°C. Vorzugsweise liegt die Umgebungstemperatur im Bereich von 10 bis 50°C. Diese niedrigen Temperaturen haben den Vorteil, dass kein Heizen bei den einzelnen Schritten nötig ist und dass der Prozess somit energiesparender, kostengünstiger und schließlich umweltfreundlicher ist als andere Prozesse.

Erfindungsgemäß sind die zurückzugewinnenden Metalle Nichteisenmetalle. Diese sind insbesondere ausgewählt aus Ga, In, Sc, Pu, Co, Ge, V, Al, Mn, Th, Ti, Zr, Hf, Nb, Ta, Mo, Bk, Eu, Dy, Pa, Gd, Yb, Ce, La, Rh, Tl, Bi und Pd. Diese liegen vorzugsweise als Ionen vor, ausgewählt aus Ga(III), In(III), Sc(III), Pu(IV), Co(III), Ge(IV), V(IV), Al(III), Mn(III), Th(IV), Ti(IV), Zr(IV), Hf(IV), Nb(V), Ta(V), Mo(IV), Bk(III), Eu(III), Dy(III), Pa(IV), Gd(III), Yb(III), Ce(III), La(III), Rh(III), Tl(III), Bi(III), Pd(II).

In einer bevorzugten Ausführungsform der Erfindung ist das zurückzugewinnende Metall ausgewählt aus Ga, In, Sc, Pu, Co und Ge und liegt als Ionen vor, ausgewählt aus Ga(III), In(III), Sc(III), Pu(IV), Co(III) und Ge(IV). In einer Ausführungsform ist das zurückzugewinnende Metall ausgewählt aus Ga und In.

In der unten beschriebenen ersten Variante des erfindungsgemäßen Verfahrens werden die Schritte in der Reihenfolge A, B, C, D, E und F durchgeführt. In der später beschriebenen zweiten Variante des erfindungsgemäßen Verfahrens werden die ersten Schritte in der Reihenfolge A, B und C durchgeführt. Dabei kann die Reihenfolge der Schritte D, E und F, wie unten beschrieben, variieren.

Die erfindungsgemäße Freisetzung (C) des zurückzugewinnenden Metalls aus dem Metall-Siderophor-Komplex erfolgt in einer ersten Variante des erfindungsgemäßen Verfahrens mittels Zugabe von Fe(III)-Ionen. Dadurch wird vorteilhaft das Metall im Metall-Siderophor-Komplex zu >90% gegen Fe(III) ausgetauscht. In der Lösung liegt nunmehr das freie zurückzugewinnende Metall und der Fe(III)-Siderophor-Komplex vor. In dieser Ausführungsform, erfolgt die Rückgewinnung (E) des Siderophors nach (D) Abtrennung des zurückzugewinnenden Metalls, durch Zugabe eines Reduktionsmittels und/oder eines Chelators. Insbesondere erfolgt die Rückgewinnung:

a. durch Zugabe eines Reduktionsmittels zum Fe(III)-Siderophor-Komplex, wodurch das Fe(III) zu Fe(II) reduziert wird, das Fe(II) dekomplexiert wird und schließlich als Fe(II) frei vorliegt,
b. durch die in a. beschriebene Zugabe eines Reduktionsmittels und zusätzliche Komplexierung des gebildeten Fe(II) durch Zugabe eines Chelators, wodurch das Fe(II) in der Lösung gebunden wird und sich das Gleichgewicht der Dekomplexierung in Richtung höherer Umsätze verschiebt, oder
c. durch Zugabe eines Überschusses eines Chelators, der Fe(III) konkurrierend zum Siderophor komplexiert.

In a. und b. erfolgt folglich eine Reduktion von Fe(III) zu Fe(II) und aufgrund der geringeren Komplexbildungskonstante der Siderophore für Fe(II) im Vergleich zu Fe(III) kommt es zur Dekomplexierung des gebildeten Fe(II).

In c. erfolgt diese Dekomplexierung ohne Reduktion nur dadurch, dass der zugegebene Chelator im Überschuss zugegeben wird. Der Chelator komplexiert das Fe(III) konkurrierend zum Siderophor. Durch den Überschuss des Chelators oder dessen höhere Komplexbildungskonstante wird die Rückgewinnung des Siderophors zu höheren Umsätzen verschoben. Fe(III) wird folglich aus dem Fe(III)-Siderophor-Komplex freigesetzt und als Fe(III)-Chelator-Komplex gebunden. Beispielsweise führt die Zugabe eines 4-fachen Überschusses an EDTA zu mehr als 95% Freisetzung des Siderophors und Bildung des Fe(III)-EDTA-Komplexes.

Der optional in E verwendete Chelator ist kein Siderophor, sondern ein unspezifischer, für den Fachmann üblicher und stabiler Komplexbildner, wie beispielsweise EDTA (Ethylendiamintetra-essigsäure), 1,10-Phenanthroline oder Ferrozin. Der Chelator komplexiert hier entweder Fe(II) oder Fe(III) oder beides.

Das in dieser ersten Variante des erfindungsgemäßen Verfahrens in C verwendete Fe(III) ist vorzugsweise ausgewählt aus $FeCl_3$.

In dieser ersten Variante des erfindungsgemäßen Verfahrens genügt es in C, für den Austausch des zurückzugewinnenden Metalls durch Fe(III) im Komplex, die Lösung bei Umgebungstemperatur zu belassen.

Bei sauren Industrieabwässern (insbesondere pH 2.0-3.0) erfolgt die Dekomplexierung des Metalls (wie z. B. des Galliums) in einer Ausführungsform durch Zugabe der zwei bis vierfachen Menge Fe(III) (bezogen auf die Menge des abzutrennenden Metalls) bei Umgebungstemperatur. Ein Austausch wird hier in der Regel zu >90% innerhalb von 24 h erreicht.

Die Umgebungstemperatur ist dabei insbesondere wie oben ausgewählt.

In einer Ausführungsform wird die Lösung, unabhängig vom pH-Wert des Industrieabwassers, zur Beschleunigung des Austauschs mit Ultraschall behandelt. Die Ultraschallbehandlung erfolgt insbesondere für 0.5 - 30 Minuten und/oder bei 10-50°C.

Geeignete Reduktionsmittel für die Reduktion in Schritt E sind ausgewählt aus $H_2SO_3$, Ascorbinsäure und deren Salzen. Insbesondere ist das Reduktionsmittel ausgewählt aus $Na_2SO_3$ und $NaHSO_3$.

Die erfindungsgemäße Freisetzung (C) des zurückzugewinnenden Metalls aus dem Metall-Siderophor-Komplex erfolgt in einer zweiten Variante des erfindungsgemäßen Verfahrens mittels Zugabe eines Chelators.

Der hier verwendete Chelator ist (wie der optional in Schritt E der ersten Variante verwendete Chelator) kein Siderophor, sondern ein unspezifischer, für den Fachmann üblicher und stabiler Komplexbildner, wie beispielsweise EDTA (Ethylendamintetraessigsäure). Der Chelator ist in der Lage, das zurückzugewinnende Metall in seiner vorliegenden Valenz, d.h. der vorliegenden Ladung, zu komplexieren. Dabei wird der Chelator entweder im molaren Überschuss gegenüber dem Siderophor eingesetzt und/oder der Chelator wird so gewählt, dass die Komplexbildungskonstante für Chelator und zurückzugewinnendes Metall größer ist als die für Siderophor und zurückzugewinnendes Metall. In dieser zweiten Variante des erfindungsgemäßen Verfahrens geht das zurückzugewinnende Metall aus dem Metall-Siderophor-Komplex über in einen Metall-Chelator-Komplex und das Siderophor liegt als Komplexbildner ohne Metall vor. In dieser Variante wird das Siderophor auf diese Weise zurückgewonnen (E) und abgetrennt (F). D. h. C und E werden bevorzugt gleichzeitig durchgeführt

In D erfolgt die Abtrennung des Metalls in dieser Variante in der einfachsten Form als Metall-Chelator-Komplex. In diesem Falle werden D und F (Abtrennung Metall und Siderophor) bevorzugt gleichzeitig durchgeführt. Vorteil der Abtrennung als Metall-Chelator-Komplex ist neben der Vereinfachung des Verfahrens, dass das Metall im Metall-Chelator-Komplex (z. B. Gallium-EDTA) in stabilisierter Form vorliegt und so gut industriell genutzt werden kann.

Möglich ist auch, das Metall aus dem Metall-Chelator-Komplex zu isolieren. Dazu erfolgt bevorzugt eine Zugabe von Fe(III)-Ionen wie in Schritt C der ersten Variante des erfindungsgemäßen Verfahrens beschrieben. Sinnvollerweise erfolgt hier vor der Zugabe der Fe(III)-Ionen eine Abtrennung des Siderophors (F).

Erfindungsgemäß findet in den Verfahrensschritten B, D und F eine Aufreinigung bzw. Abtrennung mit an sich bekannten Methoden statt.

In einer Ausführung ist in mindestens einem der Abtrennungsschritte B, D und F die Methode zur Abtrennung der Komponenten ausgewählt aus chromatographischen Methoden. Bevorzugt handelt es sich um Chromatographie mit einem Reverse-Phasen-Chromatographieharz. Insbesondere ist dieses ausgewählt aus Reverse-Phasen-C18- und Reverse-Phasen-C8-Harzen. In einer Ausführungsform sind es Harze aus Chromatographiesäulen mit einer Extra Dense-Bonding (XDB) stationären Phase aus mit demithyl-n-octadecylsilane beschichtetem Silica (zum Beispiel Typ "ZORBAX Eclipse XDB-C18 4.6 $\times$ 150mm, 5$\mu$m").

Zusätzlich oder in weiteren Ausführungsformen sind die Methoden zur Abtrennung der Komponenten in mindestens einem der Abtrennungsschritte B, D und F, ausgewählt aus:

- Festphasenextraktion
- Ausfällung,
- Filtration und/oder Nanofiltration,
- Immobilisierung der Siderophore auf einem Trägermaterial und
- Aufkonzentrieren der Metall-Siderophor-Komplexe durch Aufschäumen und Sammeln des Schaumes
- sowie Kombinationen der oben genannten Methoden.

Besonders bevorzugt ist in mindestens einem der Abtrennungsschritte B, D und F die Methode zur Abtrennung ausgewählt aus:

- Chromatographischen Methoden
- Ausfällung,
- Filtration und/oder Nanofiltration,
- Immobilisierung der Siderophore auf einem Trägermaterial und
- Aufkonzentrieren der Metall-Siderophor-Komplexe durch Aufschäumen und Sammeln des Schaumes

sowie Kombinationen der oben genannten Methoden.

Bevorzugt kommt in jedem der Abtrennungsschritte B, D und F mindestens eine Methode der zuvor beschriebenen Methoden zum Einsatz.

Alle Kombinationen der oben genannten Methoden sind möglich. Insbesondere die folgenden Kombinationen sind geeignet:

- Immobilisierung der Siderophore auf einem Trägermaterial mit Filtration und/oder Nanofiltration, und
- Ausfällung mit Filtration und/oder Nanofiltration

Das Prinzip der Ausfällung beruht auf einer Herabsetzung der Löslichkeit des auszufällenden Moleküls im vorliegenden Lösungsmittel, zum Beispiel durch eine Absenkung der Temperatur. Beispielsweise ist es möglich Desferrioxamin E und B (DFO-E und DFO-B) durch die Absenkung der Temperatur von 50°C auf <20°C in Wasser auszufällen.

Alternativ erfolgt die Ausfällung durch Zugabe eines wasserlöslichen Lösungsmittels, indem sich das Molekül

sehr schlecht löst. Beispielsweise ist es möglich das Desferrioxamin E aus einer wässrigen Lösung durch Hinzufügen von Aceton auszufällen.

In einer Ausführungsform erfolgt die Abtrennung von Fe(II) in Schritt F durch Zugabe von Sulfid- oder Phosphat-Ionen. Dies resultiert in einer Ausfällung als Eisen(II)sulfid oder Eisen(II)phosphat.

Das Prinzip der Immobilisierung von Siderophoren ist, wie bereits eingangs bei der Diskussion des Standes der Technik erwähnt, in der Literatur beschrieben. Reaktive Gruppen im Siderophor (wie z. B. die freien $NH_2$-Gruppen des DFO-B) können bei der Immobilisierung mit reaktiven Gruppen eines Trägermaterials (zum Beispiel Carboxyl-funktionalisiertes Polystoryl-Trägermaterial oder Nylon 6,6) unter Bildung von kovalenten Bindungen (wie z. B. Amid Bindungen) reagieren [ref. Takagai et al. (2007)]. Auch eine nicht-kovalente Immobilisierung von Siderophoren wie Desferrioxamin an Trägermaterialien wie zum Beispiel Silica ist bekannt [ref. Su et al. (2011)]. Solche Trägermaterialien liegen insbesondere in partikulärer Form (Kügelchen, etc) oder in Form von Fasern vor.

Das Prinzip der Aufkonzentration der Metall-Siderophor-Komplexe durch Aufschäumen und Sammeln des Schaums beruht darauf, dass sich die Metall-Siderophor-Komplexe, wie beispielsweise die Metallkomplexe mit DFO-B, DFO-E oder Marinobactin, an Schäume binden lassen. Dazu ist häufig ein zusätzlicher Schaumbildner (Tensid) nötig (vgl. ref. Kinoshita et al. (2011)), der meist chemisch synthetisiert wird.

Im Falle der fettsäurehaltigen Siderophore Marinobactine, Aquacheline, Amphibactine, Ochrobactine oder Synechobactine, ist es vorteilhaft, dass diese wegen ihrer amphiphilen Struktur selbst oberflächenaktiv sind und damit als Schaumbildner fungieren. Sie schäumen sehr gut. Im Falle dieser fettsäurehaltigen Siderophore ist es folglich möglich, die Menge der zuzusetzenden, chemisch hergestellten Tenside zu verringern, was wiederum die Regenration und Aufreinigung des Siderophors erleichtert und den Prozess umweltfreundlicher macht.

Im darauffolgenden Schritt wird der Schaum gesammelt. Vorzugsweise wird der Schaum mit dem aufkonzentrierten Metall-Siderophor-Komplex nun dem Schritt C des erfindungsgemäßen Prozesses zugeführt ("Freisetzung des Metalls aus dem Metall-Siderophor-Komplex durch Zugabe von Fe(III)-Ionen und Bildung eines Fe(III)-Siderophor-Komplexes") und ab dort gemäß dem erfindungsgemäßen Verfahren weiterbehandelt.

In einer Variante des erfindungsgemäßen Verfahrens kann das Verfahren mit weiteren konventionellen Methoden, abhängig vom einzelnen Fall, kombiniert werden.

Im Falle von $Fe^{3+}$-verunreinigten Industrieabwässern ist es zum Beispiel möglich, die Eisen- und die Gallium-Ionen mit Siderophoren wie DFO-B oder DFO-E zu komplexieren, indem zu Beginn des erfindungsgemäßen Verfahrens ein Überschuss des Siderophors verwendet wird. Nach Abtrennung der Metall-Siderophorkomplexe in Schritt B des erfindungsgemäßen Verfahrens (das sind nun der Eisen-Siderophor-Komplex und zum Beispiel ein Gallium-Siderophor-Komplex) wird mit Schritt C des Verfahrens, d.h. mit der Zugabe weiterer $Fe^{3+}$-Ionen das Verfahren wie zu Beginn beschrieben zu Ende gebracht.

Alternativ ist es möglich, $Fe^{3+}$ in einem Vorbehandlungsschritt, d.h. vor Schritt A des erfindungsgemäßen Verfahrens, entweder als Eisenarsenat oder als Eisenphosphat, auszufällen für den Fall, dass auch Arsenat- oder Phosphat-Ionen in dem Industrieabwasser enthalten sind. Dabei würde die Ausfällung durch eine Änderung des pH-Werts des Industrieabwassers ausgelöst werden.

Im Falle von Industrieabwässern, die mit mehreren verschiedenen Metallen verunreinigt sind, wird unterschieden zwischen Metallen, für die Siderophore selektiv sind (wie z.B. Ga, In, Ge(IV), Fe(III) oder V) und Metallen, die nicht bevorzugt komplexiert werden (wie Alkali- und Erdalkalimetalle, P, S, Si, Zn, Pb). Metalle, die nicht bevorzugt komplexiert werden, werden in einer Ausführungsform in Schritt B (Abtrennung des Metall-Siderophor-Komplexes) abgetrennt.

Verschiedene Metalle, die bevorzugt komplexiert werden, werden in einer Ausführungsform durch bekannte Methoden wie Chromatographie, sequentielle Fällung mit verschiedenen Fällungsmitteln und/oder Komplexierung mit verschiedenen Komplexbildnern aufgetrennt.

Ein weiterer Gegenstand der Erfindung ist die Verwendung der erfindungsgemäßen Siderophore zur Rückgewinnung von Nichteisenmetallen aus Industrieabwässern in dem erfindungsgemäßen Verfahren.

In einer bevorzugten Ausführungsform dieser Verwendung sind die Nichteisenmetalle ausgewählt aus Ga, In, Sc, Pu, Co, Ge, V, Al, Mn, Th, Ti, Zr, Hf, Nb, Ta, Mo, Bk, Eu, Dy, Pa, Gd, Yb, Ce, La, Rh, Tl, Bi und Pd.

Für die Realisierung der Erfindung ist es auch zweckmäßig, die vorbeschriebenen erfindungsgemäßen Ausgestaltungen, Ausführungsformen und Merkmale der Ansprüche in jeder Anordnung miteinander zu kombinieren.

Das Projekt, das zu dieser Patentanmeldung geführt hat, wurde durch das "Horizon 2020 research and innovation program" der Europäischen Union gefördert - Marie Sklodowska-Curie grant agreement No 704852.

Die Erfindung wird nachfolgend durch Abbildungen und Ausführungsbeispiele erläutert, ohne die Erfindung auf diese zu beschränken.

Fig. 1 zeigt eine Ausführungsform der ersten Variante des erfindungsgemäßen mehrstufigen Verfahrens zur Rückgewinnung von Nichteisenmetallen aus Industrieabwässern anhand der exemplarischen Nutzung der komplexbildenden Eigenschaften des Siderophors Desferrioxamin E sowie eines Aufreinigungsverfahrens mittels C18-Reverse-Phasen-Chromatographie.

## Ausführungsbeispiele

### 1. Zur ersten Variante des erfindungsgemäßen Verfahrens

Methodenbeschreibung für Industrieabwässer mit geringer Ga-Konzentration (4mg/L) unter Verwendung von DFO-E:

Zu 1,95 mL eines Industrieabwassers mit geringer Ga-Konzentration werden 0,05 mL einer 2mM Lösung von Desferrioxamin-E zugegeben und die erhaltene Lösung wird für 15 Minuten bei Raumtemperatur gerührt. 100 $\mu$L dieser Lösung werden in eine ZORBAX Eclipse XDB-C18 4,6 x 150 mm, 5 $\mu$m, eine kommerziell erhältliche Chromatographiesäule mit einer Flussrate der Lösungsmittel von 0,8 mL/min gepumpt. Die Arbeitstemperatur liegt bei 25°C. Als Lösungsmittel werden 10 mM $KH_2PO_4$ (Lösungsmittel A) und Acetonitril (HPLC grade, Lösungsmittel B) im Gradientenmodus genutzt. Zur Senkung der Prozesskosten ist es auch möglich, im Gradientenmodus Lösungsmittel A in einer geringeren Konzentration zu verwenden, konkret 1mM $H_3PO_4$. Der Anteil an Lösungsmittel B erhöht sich von 10% auf 15% innerhalb von 10 min. Nach der Elution schließt sich eine Equilibrierungsphase von 20 min mit einer Lösungsmittelmischung aus 90% 10 mM $KH_2PO_4$ und 10% Acetonitrile an.

Verunreinigungen des Industrieabwassers wurden in einer Fraktion zwischen 2,5-4,5 Minuten (1,6mL) gesammelt. Der Gallium-Desferrioxamin-E-Komplex wurde als Fraktion zwischen 8-10 Minuten Elutionszeit (1,6mL) gesammelt. Die Ausbeute des Gallium-Desferrioxamin-E-Komplexes betrug 92,0% $\pm$ 2,5 % bezogen auf das ursprünglich enthaltene Gallium. 4,75$\mu$L einer wässrigen 2 mM $Fe^{3+}$-Lösung werden hinzugefügt und der pH wird mit 0,1M HCl auf einen Wert von 2,5 $\pm$ 0,3 gebracht. Das Gesamtvolumen liegt jetzt bei 1,6475mL. Nach Ultraschallbehandlung für 12h und einer Temperatur <50°C werden 100 $\mu$L dieser Lösung auf eine Chromatographiesäule des Typs "ZORBAX Eclipse XDB-C18 4,6 x 150 mm, 5 $\mu$m" (kommerziell erhältlich) bei einer Flussrate der Lösungsmittel von 0,8mL/min gepumpt. Die Fraktion bei einer Elutionszeit von 2,5-4,5 min enthält das zurückzugewinnende Gallium. Die Ausbeute des Galliums ist >90%. Die Fraktion bei 8-10 min enthält den Fe-Desferrioxamin-E-Komplex in einer Ausbeute von 91%. Das Gesamtvolumen dieser letztgenannten Fraktion liegt bei 1,6mL. Die Lösung wird mit 28$\mu$L einer wässrigen 10 mM $Na_2SO_3$-Lösung versetzt und der pH-Wert wird mit 0,5M HCl auf 3,5$\pm$ 0,3 eingestellt. Weitere 28$\mu$L einer 2mM wässrigen Ethylendiamintetraessigsäure-Lösung (EDTA) wird hinzugefügt. Nach einer Standzeit der Lösung von 24h bei Raumtemperatur wird die Lösung auf eine Chromatographiesäule des Typs "ZORBAX Eclipse XDB-C18 4,6 $\times$ 150 mm, 5 $\mu$m" gegeben und mit einer Flussrate der Lösungsmittel von 0,8mL/min chromatographiert. Die Fraktion zwischen der Elutionszeit von 2,5-4,5 min enthält den Abfall. Das regenerierte Desferrioxamin-E wird in der Fraktion zwischen 16,5-18,5 min gesammelt.

Methodenbeschreibung für Industrieabwässer mit geringer In-Konzentration (10mg/L) unter Verwendung von DFO-E:

Zu 1,91 mL eines Industrieabwassers, das 0,087mM Indium enthält, werde 0,09 mL einer 2mM Lösung von Desferrioxamin-E zugegeben und die erhaltene Lösung wird für 15 Minuten bei Raumtemperatur gerührt. 100 $\mu$L dieser Lösung werden auf eine Chromatographiesäule gegeben. Die restlichen Schritte werden wie in dem oben beschriebenen Experiment für geringe Ga-Konzentrationen unter Verwendung von DFO-E durchgeführt. Im Falle des Indiumenthaltenden Industrieabwassers waren folgende anderen verunreinigenden Elemente in Ionenform enthalten: Na, K, Ca, Mg, P, S, Si, Zn and Pb.

Methodenbeschreibung für Industrieabwässer mit höherer Ga-Konzentration (40mg/L) unter Verwendung von DFO-E:

Ein analoges Experiment des gesamten Prozesses wird durchgeführt unter Verwendung von 1,6mL einer Industriewasserprobe mit einer Ga-Konzentration von 40mg/L. Zu der Lösung werden 0,4mL einer 2 mM wässrigen Desferrioxamin-E-Lösung hinzugefügt. Alle Schritte des oben genannten Verfahrens werden analog angewendet. Der einzige Unterschied besteht in den Mengen der verwendeten Reagenzien: 41,6 $\mu$L einer 1 mM $Fe^{3+}$-Lösung und später 28 $\mu$L einer 10 mM Lösung von $Na_2SO_3$ werden angewendet.

Methodenbeschreibung für Industrieabwässer mit geringer Ga-Konzentration (4mg/L) unter Verwendung von **DFO-B** und Methodenbeschreibung für Industrieabwässer **mit höherer Ga-Konzentration** (40mg/L) unter Verwendung von **DFO-B**:

Die Rückgewinnung von Gallium aus sowohl Industrieabwässern höherer Ga-Konzentration als auch aus Industrieabwässern niedriger Ga-Konzentration wird analog den obigen Methoden mit Desferrioxamin-B anstelle von Desferrioxamin-E durchgeführt. Alle Verfahrensschritte werden analog angewendet bis auf die Fraktionen, die gesammelt werden. Der Ga-Desferrioxamin-B-Komplex und auch der Fe-Desferrioxamin-B-Komplex werden gesammelt bei 4,5-6,5 min Elutionszeit anstelle von 8-10 min.

$$M = mol/L.$$

**2. Zur zweiten Variante des erfindungsgemäßen Verfahrens**

Methodenbeschreibung für Industrieabwässer **mit geringer Ga-Konzentration** (4mg/L) unter Verwendung von **DFO-E**

Zu 1,95 mL eines Industrieabwassers mit geringer Ga-Konzentration (4mg/L) werden 0,05 mL einer 2mM Lösung von Desferrioxamin-E zugegeben und die erhaltene Lösung wird für 15 Minuten bei Raumtemperatur gerührt. 100 μL dieser Lösung werden in eine ZORBAX Eclipse XDB-C18 4,6 × 150 mm, 5 μm, eine kommerziell erhältliche Chromatographiesäule mit einer Flussrate der Lösungsmittel von 0,8 mL/min gepumpt. Die Arbeitstemperatur liegt bei 25°C. Als Lösungsmittel werden 10 mM $KH_2PO_4$ (Lösungsmittel A) und Acetonitril (HPLC grade, Lösungsmittel B) im Gradientenmodus genutzt. Der Anteil an Lösungsmittel B erhöht sich von 10% auf 15% innerhalb von 10 min. Nach der Elution schließt sich eine Equilibrierungsphase von 20 min mit einer Lösungsmittelmischung aus 90% 10 mM $KH_2PO_4$ und 10% Acetonitrile an.

Verunreinigungen des Industrieabwassers wurden in einer Fraktion zwischen 2,5-4,5 Minuten (1,6mL) gesammelt. Der Gallium-Desferrioxamin-E-Komplex wurde als Fraktion zwischen 8-10 Minuten Elutionszeit (1,6mL) gesammelt. Die Ausbeute des Gallium-Desferrioxamin-E-Komplexes betrug 92,0% ± 2,5 % bezogen auf das ursprünglich enthaltene Gallium.

2,1 μL einer 10mM Ethylenediamintetraessigsäure-Lösung (EDTA) werden zu den 1,6mL der Gallium-Desferrioxamin-E-Fraktion hinzugefügt und bei Raumtemperatur für 24h gerührt. Danach werden 100 μL dieser Lösung auf eine Chromatographiesäule des Typs "ZORBAX Eclipse XDB, C18" 4,6 × 150 mm, 5 μm" (kommerziell erhältlich) bei einer Flussrate der Lösungsmittel von 0,8mL/min gepumpt. Arbeitstemperatur während der Chromatographie ist 25°C. Als Lösungsmittel werden 10 mM $KH_2PO_4$ (Lösungsmittel A) und Acetonitril (HPLC grade, Lösungsmittel B) im Gradientenmodus genutzt. Der Anteil an Lösungsmittel B erhöht sich von 10% auf 15% innerhalb von 10 min. Nach der Elution schließt sich eine Equilibrierungsphase von 20 min mit einer Lösungsmittelmischung aus 90% 10 mM $KH_2PO_4$ und 10% Acetonitril an. Die Fraktion bei einer Elutionszeit von 3,5-5,5 min enthält den Gallium-EDTA-Komplex. Das regenerierte Desferrioxamin-E wird in der Fraktion zwischen 16,5-18,5 min gesammelt. 93% (±1,5%) des Gallium-EDTA-Komplexes und 92% (±2,5%) des Desferrioxamin-E wurden zurückgewonnen im Vergleich zu den eingesetzten Mengen.

Der isolierte Gallium-EDTA-Komplex kann unmittelbar genutzt werden zur Produktion von GaN- oder GaAs-Wafern.

Zur Dekomplexierung des Gallium-EDTA-Komplexes werden 2,56μL einer 1mM Fe(III)-Lösung hinzugefügt und bei Raumtemperatur für 24h gerührt. Das führt zur Freisetzung des Galliums und zur Bildung des Fe(III)-EDTA-Komplexes.

**3. Verfahrensschritt B: Chromatographie zur Abtrennung des Metall-Siderophor-Komplexes**

Optimiertes Chromatographieharz zu Maximierung der Beladung und Minimierung des Lösungsmittelverlusts - mit einem Reverse-Phasen-Chromatographieharz

Bei der Suche nach optimierten Chromatographieharzen für die Abtrennung bzw. Aufreinigung von Ga-Siderophor-Komplexen wurde folgende Optimierung durchgeführt.

Einer Lösung, die die verschiedenen Metalle Ga, Zn, Ca, Cu, Mg und As enthält (0.25 mM - 1.0 mM jeweils), wird äquimolar (in Bezug auf die Konzentration des Ga) DFO-B oder DFO-E zugegeben. Die Mischung wird inkubiert für 24h bei 30°C unter Rühren. Anschließend werden jeweils 5 mL oder 8 mL dieser Lösung in Chromatographiesäulen injiziert, die jeweils verschiedene Packungsmaterialien (Chromtographieharze) beinhalten. Während der Chromatographie werden die Fraktionen gesammelt, die den Ga-Siderophor-Komplex enthalten. Berechnet wurden die Reinheit und der Verbrauch von Acetonitril pro mmol des isolierten Ga-Siderophor-Komplexes. Die Ergebnisse sind in Tabelle 1 aufgeführt.

Tabelle 1: Vergleich verschiedener Chromatographiesäulen bei der Aufreinigung/Abtrennung von Ga-Siderophor-Komplexen

| Chromatographiesäule | Kohlenstoffanteil [%] | Mobile Phase / Lösungsmittel | Kommentar | MeCN-Verbrauch [L pro mmol Komplex] | Reinheit des Ga-Siderophor-Komplexes [%] |
|---|---|---|---|---|---|
| Zorbax 150mm | 10 | 10% Acetonitril (MeCN) mit Gradient | DFOB+Ga 0,25mM | **1,706** | **67,3** |
| | | | DFOE+Ga 0,25mM | **2,126** | **95,5** |
| | | | EDTA B 0,5+3mM free dfo | 0,598 | 99,0 |
| | | | EDTA E 0,5+3mM free dfo | 1,112 | 99,0 |
| Zorbax 250mm | 10 | 2,5% MeCN | DFOB+Ga m as 1 mM 5ml | **0,132** | **96,9** |
| | | 10% MeCN ohne Gradient | DFOE+Ga m as 1 mM 5ml | **0,438** | **98,6** |
| | | 10% MeCN with Gradient | EDTA B 0,5+3mM 5ml | 0,448 | 99,0 |
| | | | EDTA E 0,5+3mM 5ml | 1,364 | 99,0 |
| YMC C18 | 20 | 10% MeCN ohne Gradient | DFOB+Ga m as 1 mM 8ml | **0,288** | **83,0** |
| | | | DFOE+Ga m as 1 mM 8ml | **0,448** | **100,0** |
| | | 10% MeCN mit Gradient | EDTA B 0,5+3mM 5ml | 0,938 | 99,0 |
| | | | EDTA E 0,5+3mM 5ml | 1,472 | 99,0 |

(fortgesetzt)

| Chromatographiesäule | Kohlenstoffanteil [%] | Mobile Phase / Lösungsmittel | Kommentar | MeCN-Verbrauch [L pro mmol Komplex] | Reinheit des Ga-Siderophor-Komplexes [%] |
|---|---|---|---|---|---|
| Reprosil-pur 200 ODS-3 | 12 | 10% MeCN mit Gradient | DFOB+Gam as 1mM5ml | **1,228** | **74,3** |
| | | | DFOE+Gam as 1mM 5ml | **0,994** | **92,5** |
| | | | EDTA B 0.5+3mM 5ml | 0,966 | 99,0 |
| | | | EDTA E 0.5+3mM 5ml | 2,032 | 99,0 |
| Reprospher 100 C18-DE | 16 | 2,5% MeCN | DFOB+Gam as 1 mM 8ml | **0,112** | **95,8** |
| | | 10% MeCN ohne Gradient | DFOE+Gam as 1 mM 8ml | **0,358** | **99,6** |
| | | 10% MeCN mit Gradient | EDTA B 0,5+3mM 5ml | 0,518 | 99,0 |
| | | | EDTA E 0,5+3mM 5ml | 1,32 | 99,0 |
| Ecoprep 120 C18-NE | 24 | 10% MeCN mit Gradient | DFOB+Gam as 1mM 5ml | **1,844** | **79,1** |
| | | | DFOE+Gam as 1mM 5ml | **1,112** | **89,0** |
| | | | EDTA B 0,5+3mM 5ml | 2,32 | 99,0 |
| | | | EDTA E 0,5+3mM 5ml | 1,362 | 99,0 |

(fortgesetzt)

| Chromatographiesäule | Kohlenstoffanteil [%] | Mobile Phase / Lösungsmittel | Kommentar | MeCN-Verbrauch [L pro mmol Komplex] | Reinheit des Ga-Siderophor-Komplexes [%] |
|---|---|---|---|---|---|
| ReproSil Saphir 1000 C18 | 02. Jan | 1% MeCN | DFOB Ga+As+Me 0,25mM 5r | **0,15** | **61,7** |
| | | 2,5% MeCN | DFOE Ga+As+Me 1 mM 5ml | **0,154** | **97,3** |
| | | 10% MeCN mit Gradient | EDTA B 0,5+3mM 5ml | 2,32 | 99,0 |
| | | | EDTA E 0,5+3mM 5ml | 1,362 | 99,0 |
| ProSphere 300 C18 | 4 | 2,5% MeCN | DFOB Ga+As+Me 0,5mM 5m | **0,536** | **60,1** |
| | | 5% MeCN | DFOE Ga+As+Me 1mM 5ml | **0,272** | **98,2** |
| | | 10% MeCN mit Gradient | EDTA B 0,5+3mM 5ml | 0,904 | 99,0 |
| | | | EDTA E 0,5+3mM 5ml | 0,84 | 99,0 |

Alle Chromatographiesäulen hatten 4,6mm Durchmesser. Bis auf ZORBAX (mit 150mm und 250mm) hatten alle Säulen eine Länge von 250mm. ZORBAX und YMC C18 TRIART Säulen waren mit einem Chromatographieharz gefüllt, dass eine Partikelgröße von 5μm aufwies, die anderen Harze wiesen 10μm Partikelgröße auf.

Die besten Chromatographiesäulen für die Aufreinigung/Abtrennung eines Ga-DFO-B-Komplexes sind ZORBAX und REPROSPHER 100 C18-DE, wie in Tabelle 1 erkennbar. Für einen Ga-DFO-E-Komplex sind es REPROSIL SAPHIR 1000, PROSPHERE 300 C18 und REPROSPHER 100 C18-DE. Für die Ga-Siderophor-Komplexe mit den Siderophpren DFO-B bzw. DFO-E ist REPROSPHER 100 C18-DE die beste Säule. Sie führt bei der Chromatographie zu hoher Reinheit und gleichzeitig niedrigem Lösungsmittelverbrauch.

**Literatur**

Borgias, B.; Hugi, A.D.; Raymond Kenneth N.Isomerization and Solution Structures of Desferrioxamine B Complexes of Al3+ and Ga3+1. Inorg. Chem. 1989, 28, 3538-3545. doi:10.1021/i000317a029

Hernlem, B.J.; Vane, L.M.; Sayles, G.D.The application of siderophores for metal recovery and waste remediation: Examination of correlations for prediction of metal affinities.Water Res. 1999, 33, 951-960. doi:10.1016/SOO43-1354(98)00293-0

Martinez, J. S.; Zhang, G. P.; Holt, P. D. ; Jung, H.-T. ; Carrano, C. J. ; Haygood, M. G. ; Butler, Alison.Self-Assembling Amphiphilic Siderophores from Marine Bacteria.Science 2000, 287, 1245-1247

Renard, G.; Mureseanu, M.; Galarneau. A.; Lerner. D.A.; Brunel, D.Immobilisation of a biological chelate in porous mesostructured silica for selective metal removal from wastewater and its recovery.New J. Chem. 2005, 29, 912. doi:10.1039/b500302b

Takagai, Y.; Takahashi, A.; Yamaguchi, H.; Kubota, T.; Igarashi, S.Adsorption behaviors of high-valence metal ions on desferrioxamine B immobilization nylon 6,6 chelate fiber under highly acidic conditions.J. Colloid Interface Sci. 2007, 313 (1), 359-362

Zhang G.; Amin, S. A.; Küpper, F. C.; Holt, Pamela D.; Carrano, C. J.; Butler, A.Ferric Stability Constants of Representative Marine Siderophores: Marinobactins, Aquachelins, and PetrobactinInorg Chem. 2009, 48 (23), 11466-11473

Kinoshita, T.; Ishigaki, Y.; Shibata, N.; Yamaguchi, K.; Akita, S.; Kitagawa, S.; Kondou, H.; Nii, S. Selective recovery of gallium with continuous counter-current foam separation and its application to leaching solution of zinc refinery residuesSep. Purif. Technol. 2011, 78, 181-188

Su, B. L.; Moniotte, N.; Nivarlet, N.; Chen, L. H.; Fu, Z. Y.; Desmet, J.; Li, J. FI-DFO molecules@mesoporous silica materials: Highly sensitive and selective nanosensor for dosing with iron ions.J. Colloid Interface Sci. 2011, 358 (1), 136-145

Nusen, S.; Chairuangsri, T.; Zhu, Z.; Cheng, C.Y.Recovery of indium and gallium from synthetic leach solution of zinc refinery residues using synergistic solvent extraction with LIX 63 and Versatic 10 acid.Hyd rometallurgy 2016, 160, 137-146. doi:10.1016/j.hydromet.2016.01.007

Gladyshev, S. V.; Akcil, A.; Abdulvaliyev, R.A.; Tastanov, E.A.; Beisembekova, K.O.; Temirova, S.S.; Deveci, H.Recovery of vanadium and gallium from solid waste by-products of Bayer process.Miner. Eng. 2015, 74, 91-98. doi:10.1016/j.mineng.2015.01.011

Jain, R.; Cirina, F.; Kaden, P.; Pollmann, K.Investigation of the Ga Complexation Behaviour of the Siderophore Desferrioxamine B. Solid State Phenom. 2017, 262, 643-646. doi:10.4028/www.scientific.net/SSP.262.643

Liu, F.; Liu, Z.; Li, Y.; Wilson, B.P.; Liu, Z.; Zeng, L.; Lundstrom, M.Recovery and separation of gallium(I|I) and germanium(IV) from zinc refinery residues: Part II: Solvent extraction.Hydrometallurgy 2017, 171, 149-156. doi:10.1016/j.hydromet.2017.05.009

Roosen, J.; Mullens. S.; Binnemans, K.Chemical immobilization of 8-hydroxyquinoline and 8-hydroxyquinaldine on chitosan-silica adsorbent materials for the selective recovery of gallium from Bayer liquor.Hydrometallurgy 2017, 171 , 275-284. doi:10.1016/j.hydromet.2017.05.026

**Patentansprüche**

1. Verfahren zur Rückgewinnung von Nichteisenmetallen aus Industrieabwässern, umfassend:

A: Komplexierung des zurückzugewinnenden Metalls durch Addition von Siderophoren zum Industrieabwasser, wobei die Siderophoren ausgewählt sind aus Desferrioxamin B (DFO-B), Desferrioxamin E (DFO-E), Marinobactinen, Aquachelinen, Amphibactinen, Ochrobactinen und Synechobactinen und deren Salzen,
B: Abtrennung des Metall-Siderophor-Komplexes,
C: Freisetzung des Metalls aus dem Metall-Siderophor-Komplex,
D: Abtrennung des Metalls,
E: Rückgewinnung des Siderophors, und
F: Abtrennung des Siderophors,

wobei in Schritt

C: die Freisetzung des Metalls aus dem Metall-Siderophor-Komplex durch Zugabe von Fe(III)-Ionen und Bildung eines Fe(III)-Siderophor-Komplexes erfolgt, und
E: die Rückgewinnung des Siderophors durch Zugabe eines Reduktionsmittels und/oder eines Chelators erfolgt,

oder in Schritt

C: die Freisetzung des Metalls aus dem Metall-Siderophor-Komplex durch Zugabe eines Chelators erfolgt, wodurch sich ein Metall-Chelator-Komplex bildet, und
D: das Metall als Metall-Chelator-Komplex abgetrennt wird.

2. Verfahren gemäß Anspruch 1, wobei das Reduktionsmittel ausgewählt ist aus $H_2SO_3$, Ascorbinsäure und deren Salzen.

3. Verfahren nach einem der Ansprüche 1 und 2, wobei das Metall ausgewählt ist aus Ga, In, Sc, Pu, Co, Ge, V, Al, Mn, Th, Ti, Zr, Hf, Nb, Ta, Mo, Bk, Eu, Dy, Pa, Gd, Yb, Ce, La, Rh, Tl, Bi und Pd.

4. Verfahren nach einem der Ansprüche 1 bis 3 wobei die Siderophoren ausgewählt sind aus Desferrioxaminen und fettsäurehaltigen Siderophoren und deren Salzen.

5. Verfahren nach einem der Ansprüche 1 bis 4 wobei in mindestens einem der Abtrennungsschritte B, D und F die Methode zur Abtrennung ausgewählt ist aus:

• Chromatographischen Methoden,
• Festphasenextraktion,
• Ausfällung,
• Filtration und/oder Nanofiltration,
• Immobilisierung der Siderophore auf einem Trägermaterial und
• Aufkonzentrieren der Metall-Siderophor-Komplexe durch Aufschäumen und Sammeln des Schaumes,

sowie Kombinationen der oben genannten Methoden.

6. Verfahren nach einem der Ansprüche 1 bis 5, wobei die Temperatur durchgängig zwischen 10 und 50°C liegt.

7. Verwendung von Siderophoren, ausgewählt aus Desferrioxamin B (DFO-B), Desferrioxamin E (DFO-E), Marinobactinen, Aquachelinen, Amphibactinen, Ochrobactinen und Synechobactinen und deren Salzen, zur Rückgewinnung von Nichteisenmetallen aus Industrieabwässern in einem Verfahren nach einem der Ansprüche 1 bis 6.

8. Verwendung nach Anspruch 7, wobei die Nichteisenmetalle ausgewählt sind aus Ga, In, Sc, Pu, Co, Ge, V, Al, Mn, Th, Ti, Zr, Hf, Nb, Ta, Mo, Bk, Eu, Dy, Pa, Gd, Yb, Ce, La, Rh, Tl, Bi und Pd.

## Claims

1. Method for recovering non-ferrous metals from industrial wastewater, comprising:

A: complexing the metal to be recovered by adding siderophores to the industrial wastewater,
wherein the siderophores are selected from desferrioxamine B (DFO-B), desferrioxamine E (DFO-E), marinobactins, aquachelins, amphibactins, ochrobactins and synechobactins and the salts thereof,
B: separating the metal-siderophore complex,
C: releasing the metal from the metal-siderophore complex,
D: separating the metal,
E: recovering the siderophore, and
F: separating the siderophore,

wherein in step

C: releasing the metal from the metal-siderophore complex is executed via adding Fe(III) ions and forming an Fe(III)-siderophore complex, and
E: recovering the siderophore is executed via adding a reductant and/or a chelator,

or in step

C: releasing the metal from the metal-siderophore complex is executed via adding a chelator, as a result of which a metal-chelator complex is formed, and
D: wherein the metal is separated as a metal-chelator complex.

**2.** Method according to claim 1, wherein the reductant is selected from $H_2SO_3$, ascorbic acid and the salts thereof.

**3.** Method according to any of claims 1 and 2, wherein the metal is selected from Ga, In, Sc, Pu, Co, Ge, V, Al, Mn, Th, Ti, Zr, Hf, Nb, Ta, Mo, Bk, Eu, Dy, Pa, Gd, Yb, Ce, La, Rh, Tl, Bi and Pd.

**4.** Method according to any of claims 1 to 3, wherein the siderophores are selected from desferrioxamines and fatty acid-containing siderophores and the salts thereof.

**5.** Method according to any of claims 1 to 4, wherein, in at least one of the separation steps B, D and F, the method for separation is selected from:

• chromatographic methods,
• solid phase extraction,
• precipitation,
• filtration and/or nanofiltration,
• immobilisation of the siderophores on a carrier material and
• concentration of the metal-siderophore complexes by foaming and collecting the foam, and combinations of the above-mentioned methods.

**6.** Method according to any of claims 1 to 5, wherein the temperature is consistently between 10 and 50°C.

**7.** Use of siderophores, selected from desferrioxamine B (DFO-B), desferrioxamine E (DFO-E), marinobactins, aquachelins, amphibactins, ochrobactins and synechobactins and the salts thereof, for recovering non-ferrous metals from industrial wastewater in a method according to any of claims 1 to 6.

**8.** Use according to claim 7, wherein the non-ferrous metals are selected from Ga, In, Sc, Pu, Co, Ge, V, Al, Mn, Th, Ti, Zr, Hf, Nb, Ta, Mo, Bk, Eu, Dy, Pa, Gd, Yb, Ce, La, Rh, Tl, Bi and Pd.

**Revendications**

**1.** Procédé destiné à la récupération de métaux non-ferreux à partir d'eaux usées industrielles, comprenant :

A : la complexation du métal à récupérer par ajout de sidérophores à l'eau usée industrielle,
dans lequel les sidérophores sont choisis parmi la déféroxamine B (DFO-B), déféroxamine E (DFO-E), marinobactines, aquachélines, amphibactines, ochrobactines et synéchobactines et leurs sels,
B : la séparation du complexe métal-sidérophores,
C : la libération du métal du complexe métal-sidérophores,
D : la séparation du métal,
E : la récupération du sidérophore, et
F : la séparation du sidérophore,

dans lequel, à l'étape

C : la libération du métal du complexe métal-sidérophores est effectuée par ajout d'ions Fe(III) et formation d'un complexe Fe(III)-sidérophores, et
E : la récupération du sidérophore est effectuée par ajout d'un agent réducteur et/ou d'un chélateur,

ou à l'étape

C : la libération du métal du complexe métal-sidérophores est effectuée par ajout d'un chélateur, entraînant la formation d'un complexe métal-chélateur, et
D : le métal est séparé du complexe métal-chélateur.

**2.** Procédé selon la revendication 1, dans lequel l'agent réducteur est choisi parmi le $H_2SO_3$, acide ascorbique et leurs sels.

**3.** Procédé selon l'une quelconque des revendications 1 et 2, dans lequel le métal est choisi parmi Ga, In, Sc, Pu, Co, Ge, V, Al, Mn, Th, Ti, Zr, Hf, Nb, Ta, Mo, Bk, Eu, Dy, Pa, Gd, Yb, Ce, La, Rh, Tl, Bi et Pd.

**4.** Procédé selon l'une quelconque des revendications 1 à 3, dans lequel les sidérophores sont choisis parmi les déféroxamines et les sidérophores contenant des acides gras, et leurs sels.

**5.** Procédé selon l'une quelconque des revendications 1 à 4, dans lequel, à au moins l'une des étapes de séparation B, D et F, la méthode de séparation est choisie parmi :

- méthodes chromatographiques,
- extraction en phase solide,
- précipitation,
- filtration et/ou nanofiltration,
- immobilisation des sidérophores sur un support, et
- concentration des complexes métal-sidérophores par moussage et collecte de la mousse,

ainsi que des combinaisons des méthodes mentionnées ci-dessus.

**6.** Procédé selon l'une quelconque des revendications 1 à 5, dans lequel la température est constamment comprise entre 10 et 50 °C.

**7.** Utilisation de sidérophores, choisis parmi la déféroxamine B (DFO-B), déféroxamine E (DFO-E), marinobactines, aquachélines, amphibactines, ochrobactines et synéchobactines et leurs sels, pour la récupération de métaux non-ferreux à partir d'eaux usées industrielles, dans un procédé selon l'une quelconque des revendications 1 à 6.

**8.** Utilisation selon la revendication 7, dans laquelle les métaux non-ferreux sont choisis parmi Ga, In, Sc, Pu, Co, Ge, V, Al, Mn, Th, Ti, Zr, Hf, Nb, Ta, Mo, Bk, Eu, Dy, Pa, Gd, Yb, Ce, La, Rh, Tl, Bi et Pd.

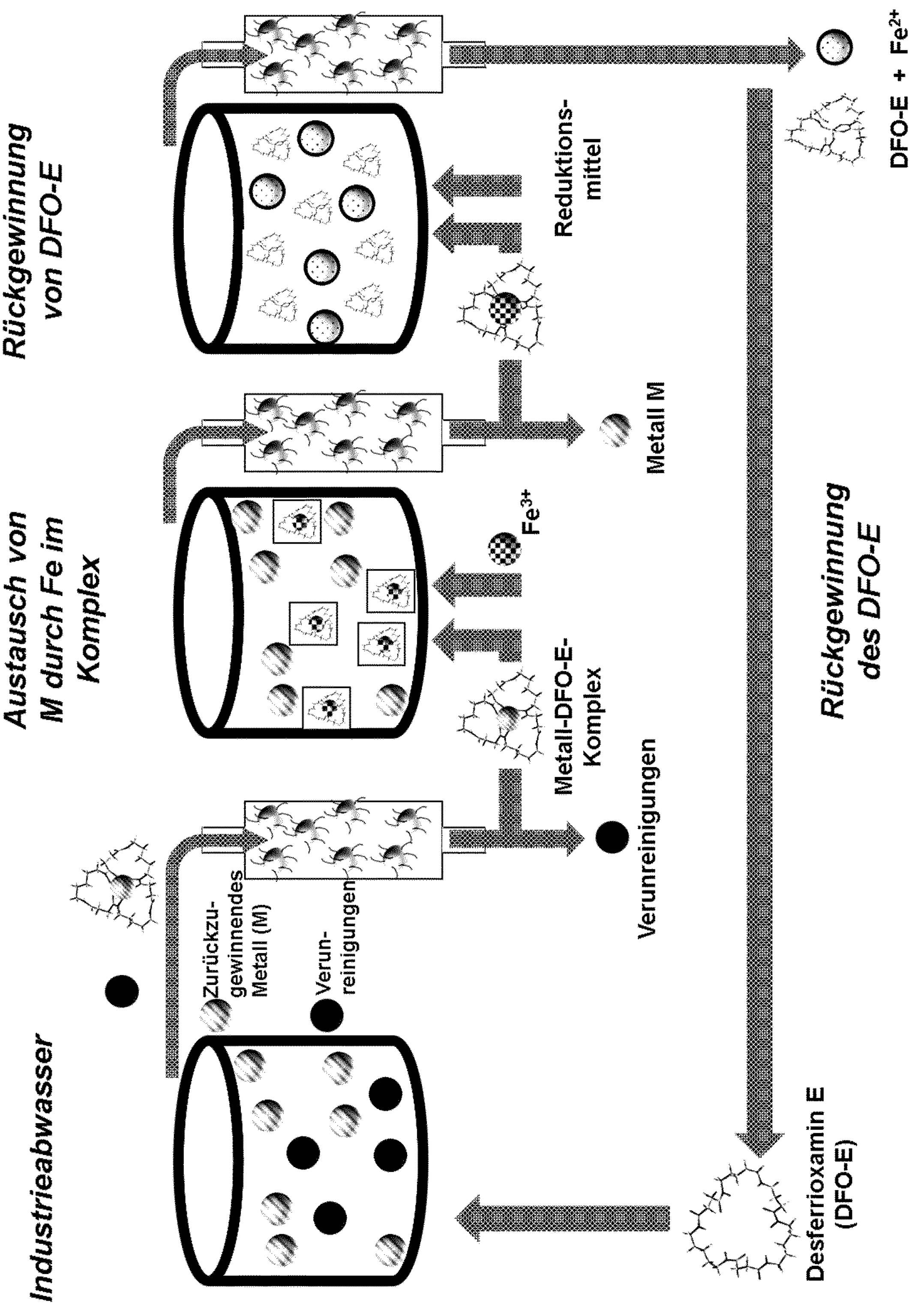
Industrieabwasser
Austausch von M durch Fe im Komplex
Rückgewinnung von DFO-E
Zurückzu-gewinnendes Metall (M)
Verun-reinigungen
Verunreinigungen
Metall-DFO-E-Komplex
$Fe^{3+}$
Metall M
Reduktions-mittel
DFO-E + $Fe^{2+}$
Rückgewinnung des DFO-E
Desferrioxamin E (DFO-E)

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20120325740 A1


### In der Beschreibung aufgeführte Nicht-Patentliteratur


- **BORGIAS, B. ; HUGI, A.D. ; RAYMOND KENNETH N.** Isomerization and Solution Structures of Desferrioxamine B Complexes of Al3+ and Ga3+1. Inorg. *Chem,* 1989, vol. 28, 3538-3545
- **HERNLEM, B.J. ; VANE, L.M. ; SAYLES, G.D.** The application of siderophores for metal recovery and waste remediation: Examination of correlations for prediction of metal affinities. *Water Res.,* 1999, vol. 33, 951-960
- **MARTINEZ, J. S. ; ZHANG, G. P. ; HOLT, P. D. ; JUNG, H.-T. ; CARRANO, C. J. ; HAYGOOD, M. G. ; BUTLER, ALISON.** Self-Assembling Amphiphilic Siderophores from Marine Bacteria. *Science,* 2000, vol. 287, 1245-1247
- **RENARD, G. ; MURESEANU, M. ; GALARNEAU. A. ; LERNER. D.A. ; BRUNEL, D.** Immobilisation of a biological chelate in porous mesostructured silica for selective metal removal from wastewater and its recovery. *New J. Chem,* 2005, vol. 29, 912
- **TAKAGAI, Y. ; TAKAHASHI, A. ; YAMAGUCHI, H. ; KUBOTA, T. ; IGARASHI, S.** Adsorption behaviors of high-valence metal ions on desferrioxamine B immobilization nylon 6,6 chelate fiber under highly acidic conditions. *J. Colloid Interface Sci,* 2007, vol. 313 (1), 359-362
- **ZHANG G. ; AMIN, S. A. ; KÜPPER, F. C. ; HOLT, PAMELA D ; CARRANO, C. J ; BUTLER, A.** Ferric Stability Constants of Representative Marine Siderophores: Marinobactins, Aquachelins, and Petrobactin. *Inorg Chem.,* 2009, vol. 48 (23), 11466-11473
- **KINOSHITA, T. ; ISHIGAKI, Y ; SHIBATA, N. ; YAMAGUCHI, K. ; AKITA, S ; KITAGAWA, S. ; KONDOU, H ; NII, S.** Selective recovery of gallium with continuous counter-current foam separation and its application to leaching solution of zinc refinery residues. *Sep. Purif. Technol.,* 2011, vol. 78, 181-188
- **SU, B. L. ; MONIOTTE, N. ; NIVARLET, N. ; CHEN, L. H. ; FU, Z. Y ; DESMET, J. ; LI, J.** FI-DFO molecules@mesoporous silica materials: Highly sensitive and selective nanosensor for dosing with iron ions. *J. Colloid Interface Sci.,* 2011, vol. 358 (1), 136-145
- **NUSEN, S. ; CHAIRUANGSRI, T. ; ZHU, Z. ; CHENG, C.Y.** Recovery of indium and gallium from synthetic leach solution of zinc refinery residues using synergistic solvent extraction with LIX 63 and Versatic 10 acid. *Hyd rometallurgy,* 2016, vol. 160, 137-146
- **GLADYSHEV, S. V ; AKCIL, A. ; ABDULVALIYEV, R.A. ; TASTANOV, E.A. ; BEISEMBEKOVA, K.O. ; TEMIROVA, S.S. ; DEVECI, H.** Recovery of vanadium and gallium from solid waste by-products of Bayer process. *Miner. Eng.,* 2015, vol. 74, 91-98
- **JAIN, R. ; CIRINA, F. ; KADEN, P. ; POLLMANN, K.** Investigation of the Ga Complexation Behaviour of the Siderophore Desferrioxamine B. *Solid State Phenom.,* 2017, vol. 262, 643-646
- **LIU, F. ; LIU, Z. ; LI, Y. ; WILSON, B.P. ; LIU, Z.; ZENG, L. ; LUNDSTROM, M.** Recovery and separation of gallium(I|I) and germanium(IV) from zinc refinery residues: Part II: Solvent extraction. *Hydrometallurgy,* 2017, vol. 171, 149-156
- **ROOSEN, J. ; MULLENS. S. ; BINNEMANS, K.** Chemical immobilization of 8-hydroxyquinoline and 8-hydroxyquinaldine on chitosan-silica adsorbent materials for the selective recovery of gallium from Bayer liquor. *Hydrometallurgy,* 2017, vol. 171, 275-284